Europäisches Patentamt

European Patent Office

Office européen des brevets

(11) Publication number: **0 149 511**
**A2**

(12) **EUROPEAN PATENT APPLICATION**

(21) Application number: **85300029.7**

(22) Date of filing: **03.01.85**

(51) Int. Cl.⁴: **G 09 G 1/16**
**G 09 G 1/28**

(30) Priority: **12.01.84 GB 8400783**

(43) Date of publication of application:
**24.07.85 Bulletin 85/30**

(84) Designated Contracting States:
**AT BE CH DE FR IT LI LU NL SE**

(71) Applicant: **SINCLAIR RESEARCH LIMITED**
**25 Willis Road**
**Cambridge CB1 2AQ(GB)**

(72) Inventor: **Karlin, David**
**96, College Place**
**London, NW1 ODJ(GB)**

(74) Representative: **Abbott, David John et al,**
**Abel & Imray Northumberland House 303-306 High**
**Holborn**
**London, WC1V 7LH(GB)**

(54) **Display memory circuit.**

㊄ The dynamic semiconductor random access memory of a computer stores the data for display in certain columns of all rows of the memory so that the addressing of the rows of the memory to produce the display serves to refresh the memory. The display is to be produced on a raster scanned cathode ray tube with 256 lines per field and either 256 or 512 picture elements per line with 4 or 2 data bits per picture element respectively. Conversion means is connected between the central processing unit and the memory to convert picture element coordinates on the raster to row and column addresses in the memory so that user addressing of the picture elements is simplified. When 2 data bits are used for each picture element these represent the green and red colour components and when both components are present this is detected and the blue colour component is also generated so that the picture element can be white, green, red or black. A serial data link is provided between the central processing unit and the keyboard so that only 2 conductors, one for control and one for data are required.

Fig.I.

A DIGITAL COMPUTER

This invention relates to a digital computer.

Dynamic random access semiconductor memory is commonly used in digital computers because integrated circuits using such memory can have a very much larger capacity than static random access semiconductor memory. This is because a static semiconductor memory requires at least two transistors for each bit and possibly more than that, whereas a dynamic memory needs only a single transistor per bit. Moreover, a static semiconductor memory requires more current for its operation because one of the transistors in each cell is conducting at all times, whereas in a dynamic memory cell the data is stored as a voltage on a capacitor. A disadvantage with dynamic semiconductor memory is that the charge on the capacitor must be refreshed periodically in order to ensure that the voltage on the capacitor has not decayed sufficiently to lead to corruption of the stored data. In a typical dynamic RAM chip 64 K memory cells are provided and these require to be refreshed every 2 ms. The refreshing of a dynamic RAM integrated circuit is effected by addressing all of the rows of the memory at least once in each 2 ms interval, the accessing of a row resulting in the data stored in all the elements in that row being applied to output amplifiers and rewritten in the elements again.

It is not necessary for any data output to be produced during the refreshing operation. Despite the disadvantage of a requirement for refreshing, the advantages provided by dynamic RAMs of greater capacity and lower power consumption are considered to outweigh it. In fact, the use of dynamic RAM integrated circuits has become so widespread that certain microprocessors include dynamic RAM refreshment cycles in their operation sequences. Nevertheless, the disadvantage of having to provide for the refreshment of the data stored in the dynamic RAMs is an inconvenience which has to be allowed for in the design of a computer.

It is an object of the present invention to provide for the refreshment of data in a dynamic memory in a manner which avoids the need for many additional accesses to the memory purely for the purpose of refreshment.

According to one aspect of the present invention there is provided a digital computer having dynamic random access semiconductor memory in which refreshing of the stored data is effected by periodically addressing each row of the memory and the computer is intended for use with display means including a raster scanned display device such as a cathode ray tube wherein data for display is stored in the memory in such locations that the reading of the data for display results in all the rows of memory being addressed at

**0149511**

sufficiently short intervals to refresh the entire memory.

The computer may include conversion means for converting data representing the coordinates of a position on the display to the memory address of the data to be displayed at that position. The conversion means, which may include a multiplexer, may be connected in address bus lines between a central processing unit and the memory.

The refreshing of the stored data may continue during part of the line and field flyback intervals.

The data for display may be read from a plurality of columns of the memory with each row addressing operation and the data so read converted to serial form at a rate appropriate to the display. The central processing unit may be permitted access to the memory between successive row addressing operations used to provide data for display as well as during either or both flyback intervals.

The display may have two modes, one having 512 pixels (picture elements) per line in which each pixel is defined by 2 bits of data, and the other having 256 pixels per line in which each pixel is defined by 4 bits of data, so that data is read from the memory at the same rate in both modes. Where a pixel is defined by 2 bits these may relate to green and red components respectively so that the 4 combinations of 2 bits give green, red, white and black for each pixel, white being achieved by arranging that if green and red are both present they also produce a blue output. Where a pixel is defined by 4 bits, one may be used to indicate the presence or absence of flashing at the pixel, and the other 3 bits respectively represent red, green and blue components and permit the pixel to have 6 colours in addition to black and white.

According to a further aspect of the invention there is provided raster scanned display means for a computer having a high resolution mode in which each picture element is defined by 2 bits and a low resolution mode in which each picture element is defined by a multiple of 2 bits so that the rate of data for display is the same in both modes, the 2 bits of a picture element in the high resolution modes respectively representing 2 primary colour components, and the means being such that it if both primary colour components are present the third primary colour component is also produced so that a white picture element is displayed.

The computer includes a display interface for receiving the data for display and producing from them signals for application to the display device either directly or after further processing. This device may be a colour cathode ray tube monitor or a colour television receiver, in which latter case the further processing would include forming a colour television signal, for example according to the PAL, SECAM or

NTSC system and modulating a suitable carrier with it. The display interface itself may be formed as a single integrated circuit using custom or semi-custom design techniques with standard cell or gate arrays.

In addition the computer has a peripheral interface for handling inputs to and outputs other than the display from the computer. This interface may also be constructed as a single integrated circuit. One of the inputs to the computer is from a keyboard and a further processor may be provided to handle the keyboard. In order to keep to a low value the number of connections to the peripheral interface when in integrated circuit form the channel connecting the keyboard to the interface may be a serial link and this link may utilise a protocol such that only two conductors (apart from earth or ground) are required.

According to another aspect of the invention there is provided a serial data link having two conductors in which a ready signal and the data are multiplexed on to one of the conductors and control signals are conveyed by the other conductor. By multiplexing the data and the ready signal on to the same conductor the need for a separate conductor for the ready signal is avoided.

In order that the invention may be fully understood and readily carried into effect a specific example of it will now be described with reference to the accompanying drawings, of which:-

FIGURE 1 is a block diagram of a computer;

FIGURE 2 is a time diagram of the display produced by the computer including the line and field flyback intervals;

FIGURE 3 is a diagram showing some details of the reading of data for display from the memory of the computer shown in Figure 1;

FIGURE 4 shows some waveforms used for memory selection in Figure 3;

FIGURE 5 shows the circuit used to control the operation of the CPU of the computer to fit in with the use of the memory for providing the display;

FIGURE 6 is the diagram of the circuit controlling the production of signals used by the display from the outputs of the memory;

FIGURE 7 shows the circuit of the control for the 2-wire link connecting the keyboard processor to the peripheral interface in Figure 1; and

FIGURE 8 is a diagram showing waveforms occurring in the circuit of Figure 7 during its operation.

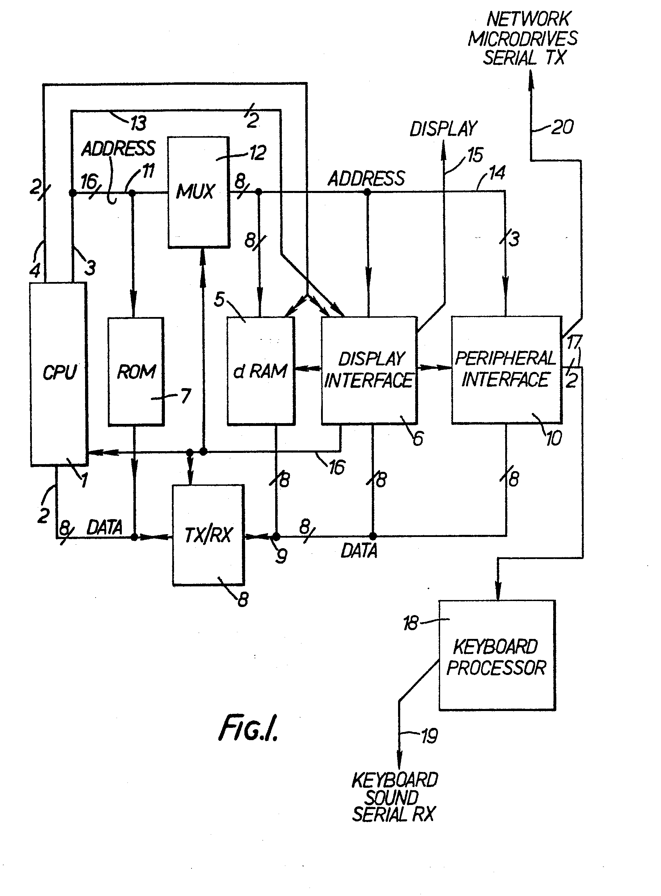

In Figure 1, the example of a computer shown has a CPU 1 connected to an 8-wire data bus 2 and an 18-wire address bus 3. Two further wires 4 carrying control signals from the CPU are connected to a dynamic semiconductor random access memory 5 and a display interface 6. The data bus 2 is connected to a read-only memory 7 and a bus transmitter-receiver 8. The transmitter-receiver 8 acts as a buffer between the data bus 2 and a second 8-wire data bus 9 which is connected to the memory 5 and the interface 6 as well as a peripheral interface 10. The address bus 3 is divided into two parts of which a first part 11 having 16 wires is connected to ROM 7 and a multiplexer 12, and the second part 13 having 2 wires is connected to the display interface 6. To the output of the multiplexer 12 is connected a second address bus 14 having 8 wires only and this is connected to the memory 5, the display interface 6 and the peripheral interface 10. The display interface 6 has an output 15 for connection to a display device which may be a monochrome or colour monitor or television receiver; it is assumed that the display device will be a colour monitor to which red, green and blue video signals can be applied, a television receiver being usable if the colour video signals are processed to a standard colour television signal form and modulated on a suitable carrier. The display interface 6 also produces some control signals on a channel 16 which conveys the signals to the CPU 1, the transmitter-receiver 8 and the multiplexer 12. The peripheral interface 10 is connected through a 2-wire serial link 17 to a keyboard processor 18 having a channel 19 for connection to a keyboard and for other purposes to be described in more detail later. The peripheral interface 10 has a second output 20 which is connectible to a network interface, to large capacity magnetic tape data stores known as micro-drives and to an interface for transmission of a serial data signal according to, for example the RS-232-C format. The channel 19 is connectible to a receiving interface for an RS-232-C signal and can also be connected to a sound reproducing device such as a loudspeaker.

The CPU 1 in the particular example is a microprocessor of type 68008 manufactured by Motorola i.a. which has connections for an 8-bit data bus and a 20-bit address bus. Only 18 of the address bus connections are used in the example described, the other two connections are available for expansion of the memory capacity. The memory 5 has a capacity of 128 K bytes and is constructed from 16 64 K RAM integrated circuits. Such integrated circuits have an 8-bit address input to which 8-bit row and column addresses are applied in turn using row and column address strobes to activate the response of the circuit to the row and column address inputs. These row and column address signals are generated by the display interface 6 in response to control signals applied to it from the CPU 1 via the control lines 4. The interface 6 also responds to the address data received directly from the CPU 1 via the 2-wire bus 13 to determine to which of the two groups of 8 RAM chips in the memory 5 the row and column address strobes are to be applied. The display interface 6 and the peripheral interface 10 may be constructed as single integrated circuits using standard cell or ULA techniques. The keyboard processor is of the type 8049 produced by Intel and is programmed to perform the keyboard scanning and other functions required of it.

It will be apparent from a consideration of Figure 1 that the operation of the computer follows conventional lines and details will now be given of the functions of certain parts of the computer.

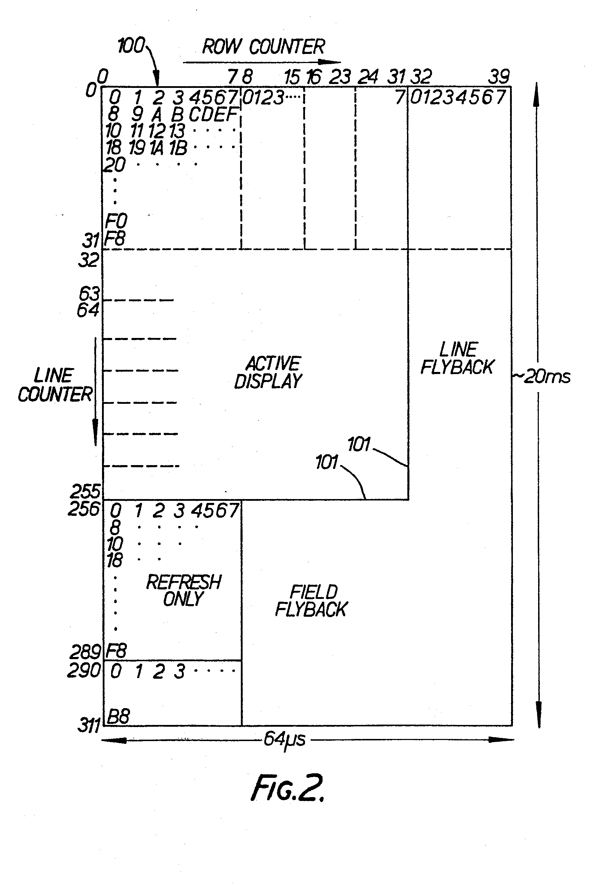

Figure 2 shows the time diagram of the display produced by the computer. This diagram corresponds to a 312 line 50 Hz non-interlaced television picture which could be reproduced by a conventional 625 line television receiver. The width of the outer rectangle 100 represents 64 μs and its height 20 ms. Of this rectangle a major part bounded by lines 101 represents the active display and the L-shaped region outside this represents the line and field flyback intervals.

In the computer shown in Figure 1, the data for display is stored in part of the memory 5 and is transferred from it via the data bus 9 to the display interface 6 and from that through the output 15 to the display. Of the 128 K bytes of storage in the memory 5 one-quarter, that is to say 32 K bytes, is allocated to the storage of the data for display. This memory space is arranged to occupy half of the columns of one set of the 64 K RAM IC's so that in reading the data for display from the memory 5, which reading is performed as required by the timing of the display itself, all of the rows of the memory 5 are addressed. Since the memory 5 is constructed from dynamic semiconductor memory it is necessary for all of the rows to be addressed at intervals of about 2 ms to refresh the stored data. As shown in Figure 2, the row addresses are distributed in groups of 8 over 32 lines of the display, the row addresses being set out in Figure 2 in hexadecimal form so that the 256 addresses of the rows extend from 0 to FF. In the first line of the display the row addresses 0 to 7 are accessed four times in cyclic succession and may be addressed for a fifth time during the line flyback period. During the second line row addresses 8 to F are accessed and so on as shown. The 32 lines during which all of the rows of the memory 5 are addressed occupy about 2 ms so that the addressing of the memory 5 to produce the display from the stored data satisfies the requirements for refreshing the memory. It will be clear that all of the rows of the memory are addressed 32 times during the active display. Since the field flyback period is slightly more than 2 ms in duration, the cyclic addressing of the rows of the memory continues for refreshing the data only during the first fifth of each line during the field flyback interval. Since there is not sufficient time during the field flyback interval to complete the addressing of all of the rows of the memory twice, such memories as can be addressed twice are and those from which there is not sufficient time are not addressed.

The display itself has two resolutions, a high resolution with 512 pixels (picture elements) per line and a low resolution with 256 pixels per line. On the basis of the row addresses shown in Figure 2, it follows that 4 bytes are read from the memory by addressing 4 columns in turn during each row address operation producing 4 bytes of data for 16 pixels at high resolution allowing 2 bits per pixel or for 8 pixels at low resolution allowing 4 bits per pixel.

Because of the manner in which the cycles of the row addresses are distributed over the active display area, the mapping of the picture elements over the memory addresses is fairly complicated. Since it is frequently required to be able to produce a particular display at a particular location on the display area, it is desirable that the relationship between the locations on the display and the memory addresses is apparently simplified as far as the user is concerned and this is achieved in the example of the computer shown by arranging that the lines of the address bus 11 are connected in such a manner to the multiplexer 12 so as to make it appear to the user that the memory addresses correspond to the coordinates of the locations on the display. In fact, the lines of the address bus 11 if numbered A0 to A15 are connected to the inputs of the multiplexer 12 in the following order: A2, A0, A3, A1, A4, A5, A7, A6, A8, A12, A9, A13, A10, A14, A11, A15. The multiplexer is arranged to select alternate inputs for connection to the bus 14 and then the intervening inputs.

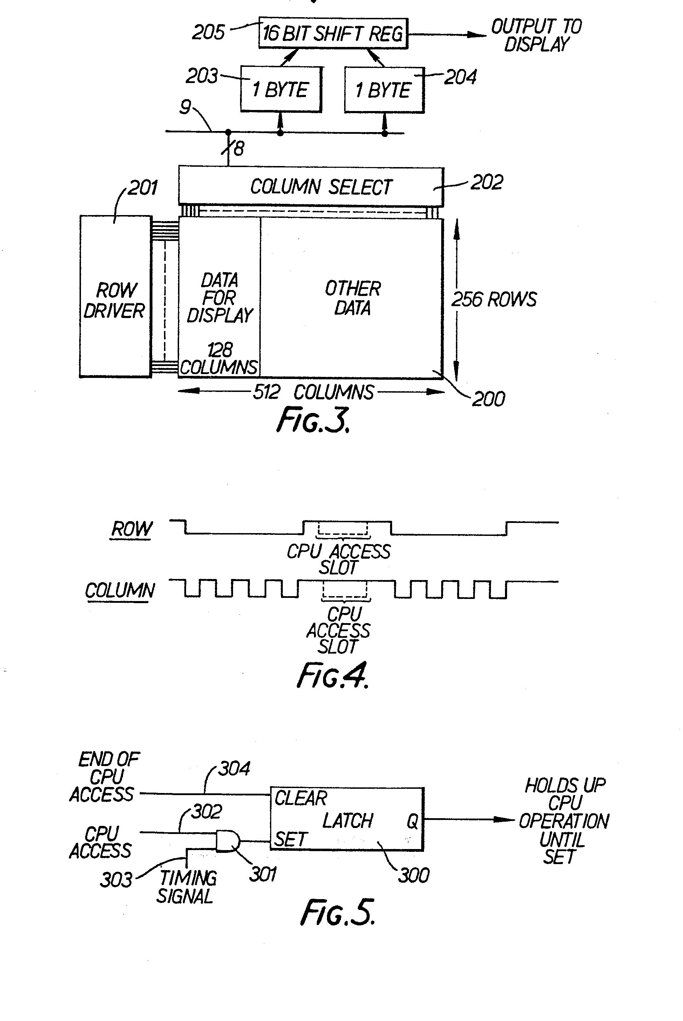

Figure 3 shows in some more detail the memory 5 and the generation of the signals for producing the display from the stored data. In Figure 3, the memory is represented by the rectangle 200 and has a 256 output row driver 201 and 512 input column selector 202. As explained above, at each row address operation 4 bytes of data are read by addressing in succession 4 columns of the memory. The 4 bytes are conveyed via the data bus 9 to the display interface 6 where the first 2 bytes are stored in registers 203 and 204 and then immediately transferred to a 16-bit shifting register 205 so that the registers 203 and 204 are able to receive the second 2 bytes. In producing the output to the display the 16 bits stored in the shifting register 205 are stepped out at a rate compatible with the display to be produced and then when all of the first 2 bytes have been shifted out the second 2 bytes are transferred in the register 205 to continue with the output. As the interval of time necessary to read the data from the memory is shorter than the interval of time over which that data is distributed to produce the display, there is a short period between the reading of the data for display from the memory during which the CPU is permitted access to the memory.

Figure 4 shows the row address strobe and column address strobe waveforms which are used. Both of these waveforms are active low and the dotted lines indicate the timing of the CPU access slot between the accesses of the memory for the data display. In practice, the length of the slot will depend on the read time of the particular memory circuits used.

Referring again to the time diagram shown in Figure 2, in addition to the distributed accesses to the memory available during the active display, the CPU 1 has access to the memory during each line flyback period and throughout the whole of the field flyback period except for the first fifth of each line during which the memory is being refreshed. The CPU operation is controlled by the output of a latch 300 shown in Figure 5 which blocks the operation of the CPU unless its output Q is high. The latch 300 is set by the output of an AND-gate 301 having as an input on line 302 a signal indicating that the CPU requires access to the memory. On a second line 303 the gate 301 receives a timing signal from counters in the display interface 6 which inhibits the setting of the latch 300 by the CPU access request except during the distributed access slots during the active display period, the line flyback intervals and the field flyback intervals except for the first fifth of each line. When the CPU no longer requires access to the memory, a signal appears on a conductor 304 clearing the latch 300.

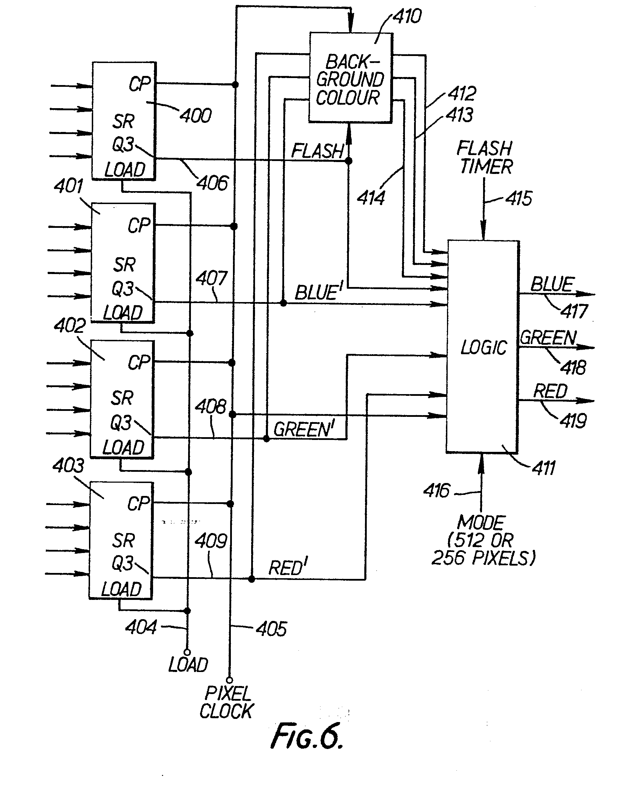

Figure 6 shows the circuit controlling the production of signals for generating the display from the data read from the memory. In Figure 6, four 4-bit shifting registers 400, 401, 402 and 403 correspond to the 16-bit shifting register 205 of Figure 3. Each of the registers receives the 4 bits representing the half byte of data which it has to store under the control of a load signal applied via conductor 404. A picture element frequency clock signal is applied via conductor 405 to each of the registers which produces the 4 bits stored in it on a respective one of the conductors 406, 407, 408 and 409. The conductor 406 which carries the flash data is connected to a background colour store 410 and a mode logic unit 411. The blue', green' and red' signals on conductors 406, 407, 408 and 409 are also applied to the background colour store 410 and to the logic unit 411. Output signals from the colour store 410 are applied to the logic unit 411 via conductors 412, 413 and 414. A flash timing signal is applied to the logic unit 411 along a conductor 415 and a mode switching signal is applied along a conductor 416. Blue, green and red video signals appear at the output of the unit 411 on conductors 417, 418 and 419.

The circuit of Figure 6 is intended to handle the data from the memory which as described above has different significance depending on the mode of the display.

In the low resolution mode each of the shifting registers stores the bits relating to the characteristic of the picture element shown against the conductors 406 to 409 so that the registers store the data for 4 picture elements. The logic unit 411 connects the blue', green' and red' signals directly to the blue, green and red output conductors. If the picture element is required to flash, it does so between a background colour and an instructed colour. The flash bit operates the background colour store 410 and causes it to record the colour of the immediately preceding picture element. It also causes the flash timing signal on the conductor 415 to switch the blue, green and red output conductors 417 to 419 between the blue', green' and red' input conductors and the conductors 412 to 414 from the background colour store 410. The flashing occurs at a predetermined rate determined by the flash timing signal.

In the high resolution mode where each pixel is represented by only two bits, these bits correspond to the green and red colours of the element and the registers 400 and 401 store the green and red bits relating to four other picture elements instead of the flash and blue' bits of the 4 elements stored in the other two registers. In addition the logic unit 411 includes a gate responsive to the green and red output signals so that if they are both present the blue output signal is also generated. This means that the 2 bits for each pixel permit the display of black, green, red and white at that pixel. In addition these four outputs will appear as a 4-level Grey Scale on a monochrome screen. The logic unit 411 also includes a switch for deriving the green and red outputs alternately from conductors 406 and 407 and conductors 408 and 409.

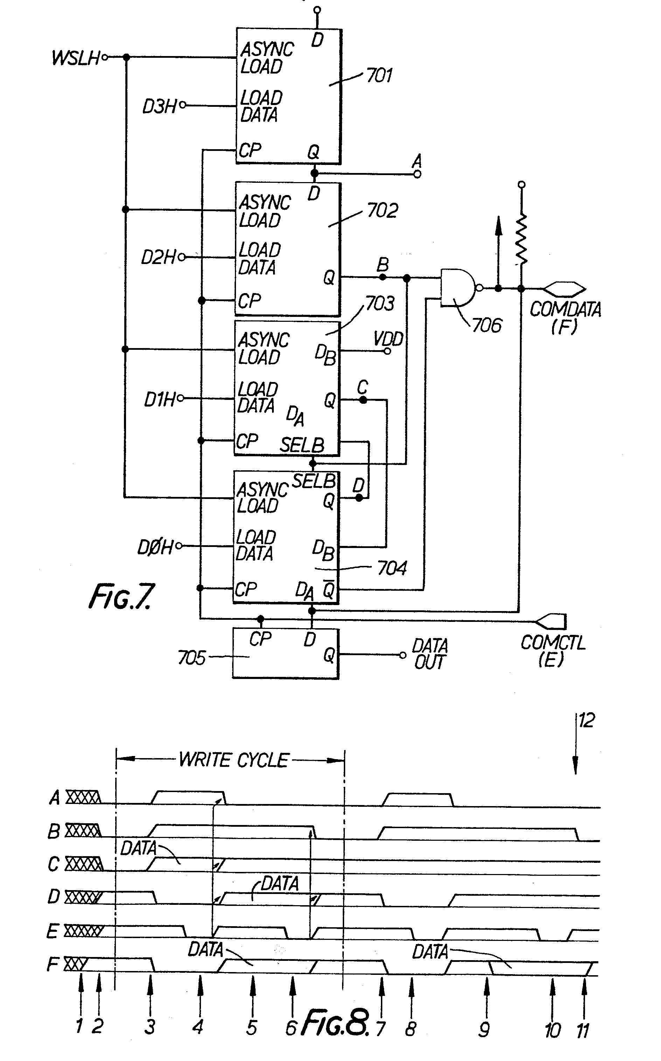

Referring to Fig. 7, the peripheral interface 10 includes a controller for the serial link 17 between the CPU part of the system and the keyboard processor 18. The controller includes general purpose data latches 701, 702, 703, 704, 705, and a NAND gate 706. The data latches 701, 702, 703 and 704 receive data from the CPU 1 or the memory 5 on four data load ports DOH, D1H, D2H, D3H, and provide the data in serial form at the output part of the NAND gate 706 on the line COMDATA which with a second line COMCTL provides the serial link to the keyboard processor 18. The data latch 705 receiver data from the keyboard processor via the COMDATA line and the CPU 1 obtains the data from the data register 705.

In the operation of the controller represented by Fig. 7, the CPU 1 exercises control of the COMDATA line along which the data passes and the keyboard processor 18 supplies clocking pulses along the COMCTL line in order to clock data into and out of the latches as required.

Operation of the arrangement represented by Fig. 7 may be better understood by reference to Fig. 8 in which the waveforms labelled A to F represent the voltage variations with time at the correspondingly labelled points in Fig. 7 and the numbers 1 to 11 represent times at which the following conditions are in force:-

1, 2 : The keyboard controller is RESET.

The CPU part of the system is RESET.

The CPU outputs 0001 to the latches. The keyboard processor makes the COMCTL line high and leaves the COMDATA line open. The keyboard processor is waiting for a 1 on the COMDATA line and subsequently a 0 on the COMDATA line.

1 to 6 : A WRITE cycle occurs.

The CPU outputs 11D0 to the latches where D is a data bit and waits for the contents of latch 702 to be 0. The keyboard processor provides pulses on the COMCTL line and the content of the latches changes subsequently to 011D at which time the keyboard processor reads the data on the COMDATA line by clocking the COMCTL line. The content of the latches changes in due course to 0011 to indicate to the keyboard processor that the data WRITE operation is complete. The keyboard processor then waits for a 0 on the COMDATA line as a signal that the next read or write access is due.

7 to 11  :  A READ cycle occurs.

The CPU outputs 1110 to the latches and waits for the content of latch 702 to be 0. The keyboard processor provides pulses on the COMCTL line and the content of the latches changes to 0111 at which time the keyboard processor puts its data on the COMDATA line which clocking the COMCTL line to set the data into the latch 705 for onward transmission to the CPU. The content of the latches changes in due course to 0011 to indicate to the keyboard processor that the data READ operation is over and the keyboard processor clears the COMDATA line for further action by the CPU part of the system.

Although the invention has been described with reference to a specific embodiment it will be understood that many changes may be made without departing from the invention.

For example, the row addresses of the memory may be arranged differently on the time diagram relating them to the display provided that all rows are addressed within the refresh time for the memory. In addition, the number of columns addressed during each row address operation may be different from four as described above. It will be appreciated that such changes will affect the arrangement of the connections of the address bus conductors to the multiplexer necessary to enable the memory addresses associated with given positions on the display to be accessed by the use of the coordinates of those positions. The protocol of the 2-wire serial link to the keyboard processor may be modified, for example, by changing the codes employed or altering the sequence of operations. Modifications may be incorporated in the display to suit different television standards or to give different numbers of picture elements per line. Moreover, the number of bits allocated to each picture element may be different from those given.

0149511

WHAT WE CLAIM IS:

1.      A digital computer having dynamic random access semiconductor memory in which refreshing of the stored data is effected by periodically addressing each row of the memory and the computer is intended for use with display means including a raster scanned display such as a cathode ray tube wherein data for display is stored in the memory in such locations that the reading of the data for display results in all the rows of memory being addressed at sufficiently short intervals to refresh the entire memory.

2.      A computer according to claim 1 wherein the data for display is stored in the same columns of all rows of the memory.

3.      A computer according to claim 2 including means for reading the data for display from the memory in a group of 8 bits at a time, 4 groups of bits stored in the same row of the memory being read consecutively and converted to serial form for producing the display.

4.      A computer according to claim 3 including means for producing a signal between the reading of one set of four groups and the next set from the memory, which signal is applied to a central processing unit enabling it to have access to the memory.

5. A computer according to claim 3 or 4 wherein, in each line of the raster, a group of the rows of the memory are addressed in order cyclically with the memory column addresses being changed for each cycle, the process being continued in successive lines for different groups of rows until all rows of the memory have been addressed, when it is repeated for different memory column addresses until all of the columns of the memory allocated to the data for display have been addressed, so that the entire section of the memory allocated to the data for display is addressed whilst the raster is being described.

6. A computer according to claim 5 wherein the memory has 256 row addresses and 128 column addresses allocated to the data for display with an 8 bit parallel output, and the display uses 1024 bits per line with 256 lines per field, there being 8 row addresses to a group and a group being addressed four times whilst a line of the raster is described, and four columns of the memory being addressed with each addressing of a row.

7. A computer according to claim 5 or 6, wherein the addressing of groups of rows of the memory continues during line flyback periods and during part of each field flyback period.

8. A computer according to any preceding claim including conversion means for converting picture element coordinates on the raster into the row and column addresses of the memory of the data to be displayed at the particular picture elements, the conversion means being connected in the address bus between the central processing unit and the memory.

9. A computer according to claim 8 wherein the conversion means includes a multiplexer having 16 inputs and 8 outputs and the memory is arranged to receive row and column addresses in turn from the multiplexer.

10. A computer according to any preceding claim wherein the display has 2 modes, the first mode having a higher number of picture elements per line in which each picture element is defined by a lower number of data bits, and the second mode having a lower number of picture elements per line in which each picture element is defined by a higher number of data bits, the arrangement being such that the number of data bits defining a line of picture elements is the same in both modes.

11. A computer according to claim 10 in which the display has 512 picture elements per line each defined by 2 data bits in the first mode, and 256 picture elements per line each defined by 4 data bits in the second mode.

12. A computer according to claim 11 wherein the two data bits defining a picture element in the first mode respectively relate to the green and red components of the picture element and means is provided for generating a blue component when both green and red components are present, so that a picture element may be displayed as white, green, red or black depending on the two data bits defining it.

13. A computer according to claim 11 or 12, wherein three of the four data bits defining a picture element in the second mode respectively relate to green, red and blue components of the picture element, the fourth data bit causing the picture element to flash by alternating its colour between that represented by the other three data bits and another colour.

14. A computer according to claim 13 wherein the other colour is a stored background colour derived from a preceding picture element.

15. Raster scanned display means for a computer having a high resolution mode in which each picture element is defined by 2 bits and a low resolution mode in which each picture element is defined by a multiple of 2 bits so that the rate of data for display is the same in both modes, the 2 bits of a picture element in the high resolution modes respectively representing two primary colour components, and the means being such that if both primary colour components are present the third primary colour component is also produced so that a white picture element is displayed.

16. Display means according to claim 15 wherein in the low resolution mode each picture element is defined by four bits, of which three respectively relate to the three primary colour components and the fourth indicates whether or not the picture element is to flash by alternating between the colour represented by the other three bits and another colour.

17.    Display means according to claim 16 wherein the other colour is a stored background colour derived from a preceding picture element.

18.    A serial data link having two conductors in which a ready signal and the data are multiplexed on to one of the conductors and control signals are conveyed by the other conductor.

19.    A serial data link according to claim 18 in which whilst a signal is applied to the other conductor a sequence of signals forming a ready signal is applied to the one conductor.

20.    A serial data link according to claim 18 or 19 in which each data bit to be transmitted is stored with a predetermined sequence of bits in a shifting register which is clocked by pulses received via the other conductor to output the stored bits to the one conductor, the bits of the predetermined sequence following the data bit indicating to the receiver that the transmission of the data bit has been completed.

21.    A serial data link according to claim 18, 19 or 20 arranged for bidirectional data transmission.

22.    A digital computer including a serial data link according to any of claims 18 to 21 for conveying inputs from the keyboard to the central processing unit and the memory.

Fig.I.

FIG.2.

0149511

**205** ― 16 BIT SHIFT REG → OUTPUT TO DISPLAY

**203** ― 1 BYTE    1 BYTE ― **204**

9

8

COLUMN SELECT ― **202**

**201**

ROW DRIVER

DATA FOR DISPLAY

OTHER DATA

256 ROWS

128 COLUMNS

512 COLUMNS

200

*Fig.3.*

ROW

CPU ACCESS SLOT

COLUMN

CPU ACCESS SLOT

*Fig.4.*

END OF CPU ACCESS ― **304**

CPU ACCESS ― **302**

**303** TIMING SIGNAL

**301**

CLEAR

SET

LATCH    Q

**300**

HOLDS UP CPU OPERATION UNTIL SET

*Fig.5.*

*FIG.6.*

Fig.7.

Fig.8.

WRITE CYCLE

COMDATA (F)

COMCTL (E)

DATA OUT